Europäisches Patentamt

European Patent Office

Office européen des brevets

(19)

(11) Publication number: **0 365 281**
**A2**

# EUROPEAN PATENT APPLICATION

(21) Application number: 89310654.2

(22) Date of filing: 17.10.89

(51) Int. Cl.⁵: **G06F 12/08**

(30) Priority: 20.10.88 US 260152

(43) Date of publication of application:
25.04.90 Bulletin 90/17

(84) Designated Contracting States:
DE FR GB IT SE

(71) Applicant: **TANDEM COMPUTERS
INCORPORATED
19333 Vallco Parkway
Cupertino California 95014(US)**

(72) Inventor: **Horst, Robert W.
2804 Robeson Park Drive
Champaign Illinois 61821(US)**

(74) Representative: **Ayers, Martyn Lewis Stanley
et al
J.A. KEMP & CO. 14 South Square Gray's Inn
London, WC1R 5EU(GB)**

(54) Cache memory supporting fast unaligned access.

(57) A cache system that fetches aligned and un-
aligned references in one cache cycle that includes
a separate memory unit for each word included in
the multiword data unit fetched during one reference.
Memory processing hardware responsive to the
word address of a first word to be fetched fetches a
sequence of words following the first word from the
memory units. The address field identifying the posi-
tion of the first word in the multiword data unit is
utilized to order the words fetched from the memory
units to correspond to the order of the words in the
sequence to be fetched.

FIG._3.

## CACHE MEMORY SUPPORTING FAST UNALIGNED ACCESS

The invention relates generally to digital memory systems and, more particularly, relates to a system that stores and fetches multiword data units.

Many processor systems use one or more cache memories as a way of providing data and/or instructions to the processor. Often the caches are designed so that data from predetermined sets of storage locations storing multiple words of data may be fetched. However, for programming flexibility, word addressing capability is provided.

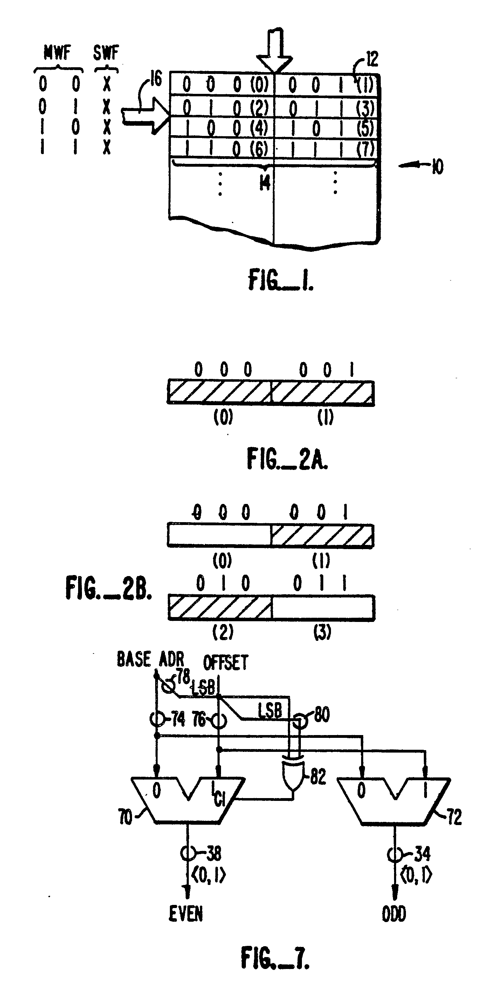

Fig. 1 is a diagram of a typical cache memory 10. Single word locations 12 are grouped horizontally in multiword data units (MWDUs) 14 including two words 12 each. The three bit word address for each word 12 are transferred to the cache via an address bus 16. Each single word location 12 is labelled by its binary word address with the decimal equivalent indicated by parenthesis.

The two most significant bits of each word address form a multiword field (MWF) which addresses one of the MWDUs of the cache. The cache is designed to respond to the MWF in any word address and to fetch the data stored in the MWDU addressed by the field during a single cache cycle. The least significant bit of the word address forms a single word field (SWF) that identifies the position of the word location in the MWDU.

For example, for the word address "001" the MWF field bits "00" identify the first MWDU stored in the cache 10. Thus, the words identified by the addresses "000" and "001" are fetched from the cache.

Generally, there may be an arbitrary number (M) of words included in an MWDU. To achieve maximum programming flexibility, the cache should be designed so that any group of M successive words can be fetched regardless of whether all the words are stored in the same MWDU.

Two data alignment configurations are depicted in Figs. 2A and 2B. In Fig. 2A, the words stored at locations "000" and "001" are to be fetched. Both addresses have the same MWF and are fetched from the cache in response to the MWF. Thus, the words to be fetched are aligned with the MWDU and may be fetched during a single cache cycle.

In Fig. 2B, the words stored at locations "001" and "010" are to be fetched. The MWFs of the addresses of these unaligned words are different and the words are stored in different MWDUs. Accordingly, data from both MWDUs must be fetched over two fetch cycles and desired words from each MWDU must be merged.

In some existing machines, the second fetch is handled automatically by the hardware while in other machines unaligned memory references cause a trap to software which performs the second fetch and the merge.

Thus, a fetch of unaligned data requires additional time and imposes a penalty on overall processor performance.

The present invention is a memory system that fetches a given sequence of words in one memory cycle regardless of whether the sequence is aligned with the word boundaries of the memory system. The words of a given MWDU are stored in separate memory units where the storage location in each memory unit is addressed by the MWF of the word addresses of the words in the given MWDU.

Address processing hardware utilizes the word address of the first word in the given sequence to generate a set of modified MWFs that are provided to the address ports of the memory units. These modified MWFs access the words in the sequence from the memory units, however, the words are not ordered the same as the words in the given sequence.

The outputs of the memory units are coupled to the inputs of a data routing unit which utilizes the SWF of the first word in the sequence as a control field. The data routing unit couples the outputs of the memory unit to an output bus to transfer the sequence of words onto the bus in the correct order.

According to one aspect of the invention, the address processing hardware includes a set of incrementers adapted to receive the word address of the first word in the given sequence. The MWF of the incremented word address from each incrementer is provided to the address port of an associated memory unit. The increment amount for each incrementer is determined by the position of the word stored in the associated memory unit in the MWDU. For example, for a two word system, there is no incrementation for the first (even) memory unit and incrementation by 1 for the second (odd) memory unit.

Additional features and advantages will be apparent in view of the accompanying drawings and following detailed description.

Fig. 1 is a schematic diagram of a cache memory system;

Figs. 2A-2B are schematic diagrams illustrating aligned and unaligned references for a two word system;

Fig. 3 is a block diagram of a preferred embodiment of a two word system;

Figs. 4A-4D are schematic diagrams illustrating aligned and unaligned references for a four word system;

Fig. 5 is a block diagram of a preferred embodiment of a four word system;

Fig. 6 is a table illustrating the operation of the data switch; and

Fig. 7 is a block diagram of an alternative address processing system.

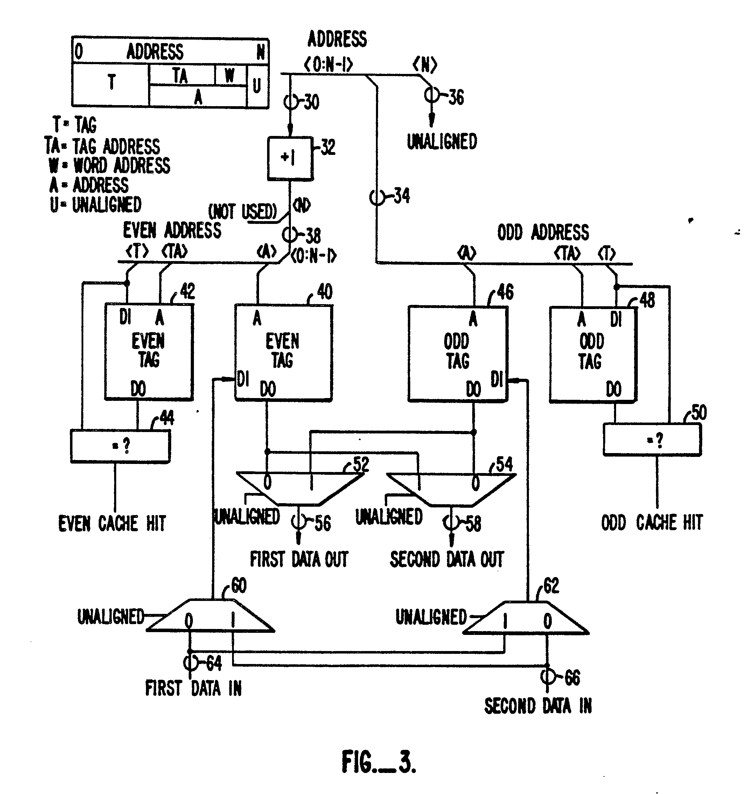

The preferred embodiments of the invention will now be described with reference to the drawings where the same reference numerals identify like of corresponding parts throughout the several views. Referring now to Fig. 3, a schematic diagram of an embodiment having multiword data units (MWDUs) including two words is depicted.

In Fig. 3, an N + 1 bit address bus 30 is coupled to the input of a + 1 incrementer 32. The first address bus 10 branches into an N bit Odd MWF bus 34 and a one bit unaligned bit bus 36. In the present specification, the least significant address bit (LSB) is labelled by N and the most significant bit (MSB) by 0. A partial address field is denoted by <1:k> with 1 being the MSB and k being the LSB. The output of the incrementer 32 is coupled to an N bit Even MWF bus 38.

Selected lines of the Even MWF bus 38 are coupled to the address input of an Even Cache 40, to the address input of an Even Tag Store 42, and to the data inputs of the Even Tag Store 42 and an Even Cache Hit Comparator 44. Similarly, selected lines of the Odd MWF bus 34 are coupled to the address input of an Odd Cache 46, to the the address input of an Odd Tag Store 48, and to the data inputs of the Odd Tag Store 48 and an Odd Cache Hit Comparator 50.

First and second Data Out Muxes 52 and 54 both have 0 and 1 input ports, a control port coupled to the unaligned bit bus 36, and an output port coupled to first and second Data Out buses 56 and 58, respectively. The data out port of the Even Cache 40 is coupled to the 0 input port of the first Data Out mux 52 and to the 1 input port of the second Data Out mux 54. The data out port of the Odd Cache 46 is coupled to the 1 input port of the first Data Out Mux 52 and to the 0 input port of the second Data Out mux 54.

First and second Data In Muxes 60 and 62 both have 0 and 1 input ports, a control port coupled to the unaligned bit bus 36, and an output port coupled to first and second Data In buses 64 and 66, respectively. The data out port of the first Data In Mux 60 is coupled to the data input port of the Even Cache 40, the 0 input port is coupled to a first Data In bus 64, and the 1 input port is coupled to a second Data In bus 66. The data out port of the second Data In Mux 62 is coupled to the data input port of the Odd Cache 48, the 0 input port is coupled to the second Data In bus 66, and the 1 input port is coupled to the first Data In bus 64.

The operation of the system depicted in Fig. 3 will now be described with reference to Figs. 1-3. Referring to Fig. 1, the even words (words 0,2,4, etc.) on the left side of the diagram are stored at successive storage locations in the even cache 40. The odd words (words 1,3,5,etc.) on the right side of the diagram are stored in successive storage locations in the odd cache 46. The MWF of the word addresses functions to access a storage location in the caches 40 and 46. The MWF "00" fetches word (0) from the even cache 40 and word (1) from the odd cache; MWF "01" fetches word (2) from the even cache 40 and word (3) from the odd cache 46 and so on. The LSB of the word address is the single word field (SWF) and is always "0" for words stored in the even cache 40 and "1" for words stored in the odd cache 46.

First, an aligned memory reference, as depicted in Fig. 2A, will be described. The words to be fetched are (0) and (1). Thus, the word address for the first word in the set of words to be fetched is "000" and the MWF for both words is "00". This MWF is transmitted to the address port of the Odd Cache 46 on the Odd MWF bus 34 and word (1) is output at the data out port of the Odd Cache 46. The entire word address is incremented by incrementer 32 which changes the word address from "000" to "001". Note that the MWF is not changed by this incrementation. Accordingly, the MWF "00" is transmitted to the address port of the Even Cache 40 so that word (0) is output at the data out port of the Even Cache 40. The SWF, equal to "0", is transmitted to the muxes 52 and 54 and causes the 0 input of each mux to be coupled to the respective mux output port. Thus, word (0) is transferred to the first Data Out bus 56 and word (1) is transferred to the second Data Out bus 58 as depicted in Fig. 2A.

Next, an unaligned reference, as depicted in Fig. 2B, will be described. The MWF field of the first word address, "001", of the first word of the set of words to be fetched is "00" and the SWF is "1". This MWF is transmitted to the address port of the Odd Cache 46 on the Odd MWF bus 34 and word (1) is output at the data out port of the Odd Cache 46. The entire word address in incremented by incrementer 32 which changes the word address from "001" to "010". Thus, the MWF is changed to 01 and transmitted to the address port of the Even Cache 40 so that word (2) is output at the data out port of the Even Cache 40. The SWF, equal to "1", is transmitted to the muxes 52 and 54 and causes the 1 input of each mux to be coupled to the respective mux output port. Thus, word (1) is transferred to the first Data Out bus 56 and word (2) is transferred to the second Data Out bus 58 as depicted in Fig. 2A.

In view of the above, it is apparent that the system depicted in Fig. 3 facilitates fetching unaligned, as well as aligned, data in one cache cycle. Thus, the performance penalty associated with fetching unaligned data has been eliminated.

The separate Tag stores 42 and 48 and Cache Hit comparators are required because unaligned references could cross cache line boundaries. Thus, either the even or odd cache 40 or 46 may have a cache miss while the other has a hit. The function of this circuitry is standard and not a part of the invention.

The first and second Data In muxes 60 and 62 function in an analogous manner to the Data Out muxes to load aligned or unaligned references into the cache in one cache cycle.

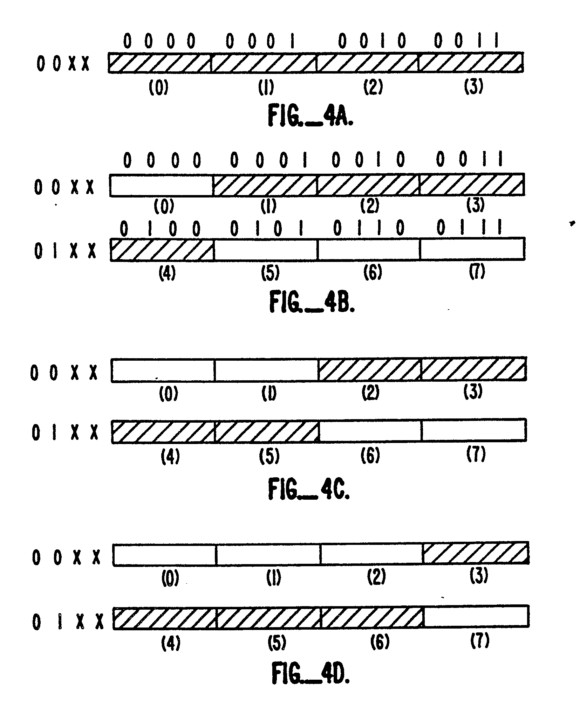

The invention is not limited to any an MWDU having any particular number of words. A system where each MWDU has four words is illustrated by Figs. 4-6. Figs. 4A-4D depict the four possible alignment situations. The SWF for each word is now a two bit field.

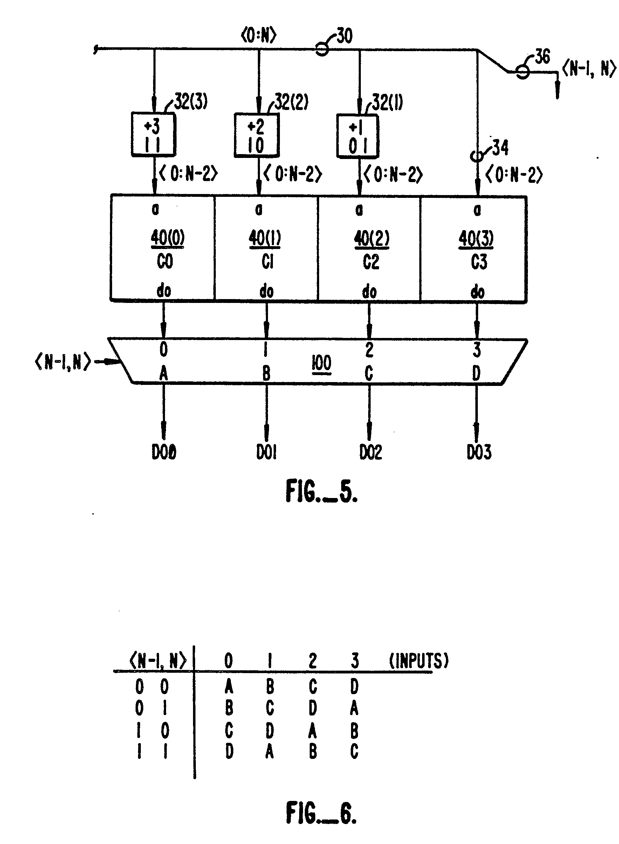

Referring to Fig. 5, a first cache 40(0) stores the first word in each MWDU, a second cache 40-(1) stores the second word, and so on. The MWF of a word address of any word in a selected MWDU accesses the words in the selected MWDU from each cache 40.

In operation, the word address of a first word in a desired set of 4 sequential words to be fetched is placed on the address bus 30. The incrementers 32 receive this word address and generate the MWF fields required to fetch the words in the desired set from each cache 40.

A data switch 100 is controlled by the SWF field to order the fetched words according to Figs. 4A-4D. Fig. 6 is a table depicting the interconnection of the inputs and outputs of the data switch 100 for different SWF fields.

Referring to Fig. 7, an embodiment having two-word MWDUs that generates the required MWFs directly from the base address and offset of the first word address of a pair of words to be fetched is depicted.

First and second adders 70 and 72 each have 0 and 1 data inputs, a carry-in input, and a data output. Only the MWF of the sum generated by the adders is transferred to the even and odd buses 34 and 38. A base address bus 74 is connected to the 0 data input and an offset bus 76 is connected to 1 data input of each adder 70 and 72. The LSB lines 78 and 80 of the base address bus 74 and offset bus 76 are coupled to the input ports of an XOR gate 82. The output of the XOR gate 82 is coupled to the CI input of the first adder 70 and to the control ports of the MUXes 52, 54, 60, and 62 of Fig. 3. The remainder of the system is the same as depicted in Fig. 3.

In operation, the state of the XORed LSBs is provided to the first adder 70 to cause the correct incrementation of the even address to assure that the proper MWF is transferred to the even cache 40 and is provided to the MUXes as a control signal to correctly order the fetched words.

The invention has now been described with reference to the preferred embodiments. The number of words in a multiword unit and the number of bits in a word may be varied as required and is not a limitation of the invention. Further, in the above description the MWDUs were aligned with the left-most word having the lowest address. However, the invention is equally applicable to a system where the right-most word of the MWDU has the lowest address. Other variations and substitutions are now apparent to persons of ordinary skill in the art. Accordingly, the invention is not intended to be limited except as provided by the appended claims.

**Claims**

1. In a data processing system, a cache memory apparatus for receiving a memory word address for referencing a pair of words to be fetched, said memory apparatus comprising:
means responsive to said memory word address for generating first and second cache addresses of the words referenced;
even and odd caches for storing first and second words to be fetched in response to said first and second cache addresses respectively; and
data routing means, adapted to receive said fetched words and responsive to the memory word address to order said fetched words as first and second read data values with the first read data value being the word addressed by the received memory word address.

2. In a data processing unit of the type where multiword data units (MWDUs), comprising words stored in predetermined groups of N word locations and having fixed word boundaries relative to the remaining words in memory, are fetched from memory during a single fetch cycle, with a given word location in memory identified by a word address having a multiword field (MWF) identifying a given multiword data unit in which the given word is included and a single word field (SWF) identifying the location of the given word within the given MWDU, a system for fetching a given set of sequential words, with the set included in a set of first and second sequential MWDUs, in one fetch cycle regardless of whether the given set of words is aligned with the fixed boundaries of the first and second MWDUs, said system comprising:
an ordered set of N memory units, each storing a different one the N words in each MWDU at a storage location identified by the MWF of the word addresses of the words in the MWDU, with the first word in each MWDU stored in the first one of said memory units, the second word stored in the second one, and so forth;

means for forming an ordered set of N modified MWFs, with the first modified MWF equal to the the MWF of the word address of the first word in the set of words to be fetched, the second modified MWF equal to the MWF of the word address of the first word in the set of words to be fetched incremented by one, the third modified MWF equal to the MWF of the word address of the first word in the set of words to be fetched incremented by two, and so forth, and with the first modified address utilized to fetch a word from said first memory unit, the second modified MWF utilized to fetch a word from said second memory unit, and so forth; and

a data routing unit, having a set of input ports adapted to receive said words fetched from said memory units, having a control port adapted to receive the SWF of the word address of the first word in said ordered set of words to be fetched, and having an ordered set of output ports, for routing said received words to said ordered set of output ports, under control of said received SWF, where the first word in said ordered set is routed to said first output port, the second word is routed to said second output ports, and so forth, so that the set of sequential words is fetched during a single fetch cycle regardless of whether the set is aligned with the word boundaries of the first and second MWDUs.

3. In a data processing unit of the type where multiword data units (MWDUs), comprising words stored in predetermined groups of N word locations and having fixed word location boundaries relative to the remaining word locations in memory, are fetched from memory during a single fetch cycle, a system for fetching words from a given set of sequential word locations, included in a set of first and second sequential MWDUs, in one fetch cycle regardless of whether the given set of word locations is aligned with the fixed boundaries of the first and second MWDUs, where the given set of word locations comprises a first subset of word locations included in the first MWDU and a second subset of word locations included in the second MWDU when the given set is unaligned with the boundaries of the first and second MWDUs, said system comprising:

means for fetching the words store in the first and second subsets of word locations during a single fetch cycle; and

means for sequentially ordering said fetched words to correspond to ordering the word locations of the given set.

4. The system of claim 3 wherein the first MWDU is fetched by a first MWDU address and the second MWDU is fetched by a second MWDU address, said means for fetching comprising:

a memory unit having N separately addressable word storage units, each word storage unit for fetching the word stored in a single one of the word storage locations in a given MWDU when provided with the MWDU address of the given MWDU;

means for providing the MWDU address of the first MWDU only to those word storage units storing words in the word storage locations of the first subset of word storage locations and for providing the MWDU address of second MWDU only to these word storage unit storing words in word storage locations of second subset of word storage locations.

5. In data processing system including even and odd caches for storing pairs of sequential aligned data words to be fetched in one fetch cycle, with each word address including a pair field, identifying a pair of words aligned with the even and odd caches, and a word field, identifying the position of the word in the pair, a method for accessing an unaligned pair of words during a single fetch cycle, said method comprising the steps of:

storing the first word in each aligned pair in the even cache and the second word in each aligned pair in the odd cache, with each first and second word accessed by the pair field of the word address of either word in the pair;

providing a first word address of the first word in a pair of words to be accessed, the word field of said first word address being an indication of the whether the pair is aligned;

providing the pair field of said first word address to the odd cache to fetch an odd pair word;

incrementing said first word address to form an incremented address;

providing the pair field of said incremented address to the even cache to fetch an even pair word; and

utilizing said indication to correctly order said fetched words.

| MWF | SWF |   |
|-----|-----|---|
| 0   | 0   | X |
| 0   | 1   | X |
| 1   | 0   | X |
| 1   | 1   | X |

| | | | | | | |
|---|---|---|---|---|---|---|
| 0 | 0 | 0 (0) | 0 | 0 | 1 | (1) |
| 0 | 1 | 0 (2) | 0 | 1 | 1 | (3) |
| 1 | 0 | 0 (4) | 1 | 0 | 1 | (5) |
| 1 | 1 | 0 (6) | 1 | 1 | 1 | (7) |

FIG__I.

```
0 0 0    0 0 1
```
(0)        (1)

FIG__2A.

```
0 0 0    0 0 1
```
(0)        (1)

FIG__2B.
```
0 1 0    0 1 1
```
(2)        (3)

BASE ADR   OFFSET

EVEN                ODD

FIG__7.

FIG._3.

0 0 X X

| 0 0 0 0 | 0 0 0 1 | 0 0 1 0 | 0 0 1 1 |
|---|---|---|---|
| (0) | (I) | (2) | (3) |

## FIG._4A.

0 0 X X

| 0 0 0 0 | 0 0 0 1 | 0 0 1 0 | 0 0 1 1 |
|---|---|---|---|
| (0) | (I) | (2) | (3) |

0 1 X X

| 0 1 0 0 | 0 1 0 1 | 0 1 1 0 | 0 1 1 1 |
|---|---|---|---|
| (4) | (5) | (6) | (7) |

## FIG._4B.

0 0 X X

| (0) | (I) | (2) | (3) |
|---|---|---|---|

0 1 X X

| (4) | (5) | (6) | (7) |
|---|---|---|---|

## FIG._4C.

0 0 X X

| (0) | (I) | (2) | (3) |
|---|---|---|---|

0 1 X X

| (4) | (5) | (6) | (7) |
|---|---|---|---|

## FIG._4D.

FIG._5.

| ⟨N-1, N⟩ | | 0 | 1 | 2 | 3 | (INPUTS) |
|---|---|---|---|---|---|---|
| 0 | 0 | A | B | C | D | |
| 0 | 1 | B | C | D | A | |
| 1 | 0 | C | D | A | B | |
| 1 | 1 | D | A | B | C | |

FIG._6.